Europäisches Patentamt

European Patent Office

Office européen des brevets

(11) Veröffentlichungsnummer: **0 427 113 A1**

## (12) EUROPÄISCHE PATENTANMELDUNG

(21) Anmeldenummer: 90120947.8

(22) Anmeldetag: 31.10.90

(51) Int. Cl.5: **B01J 19/12**, H05B 6/64, H05B 6/80

(30) Priorität: 31.10.89 DE 3936267

(43) Veröffentlichungstag der Anmeldung:
15.05.91 Patentblatt 91/20

(84) Benannte Vertragsstaaten:
DE FR GB IT

(71) Anmelder: INWAVE AG INDUSTRIE MIKROWELLENTECHNIK
Postfach
CH-9035 Grub/AR(CH)

(72) Erfinder: Lautenschläger, Werner
Waldstrasse 15
W-7970 Leutkirch(DE)
Erfinder: Heierli, Jacob
Riemen 160
CH-9035 Grub/AR(CH)

(74) Vertreter: Schmidt-Evers, Jürgen, Dipl.-Ing.
Patentanwälte Mitscherlich, Gunschmann
Dr. Körber, Schmidt-Evers, Melzer, Dr. Schulz
Steinsdorfstrasse 10
W-8000 München 22(DE)

(54) Mikrowellenofen mit Einsatz.

(57) Die Erfindung betrifft einen Mikrowellenofen mit einem Einsatz zur Aufnahme von zu erwärmenden Stoffen, wobei der Einsatz aus einem für Mikrowellen durchlässigen Material besteht. Dieses Material kann ebenso wie zu erwärmende Stoffe, die keine oder nur sehr geringe Mikrowellen-Absorptionseigenschaften aufweisen, im bekannten Mikrowellenofen nicht erwärmt werden. Um diesen Nachteil zu überwinden, weist das Material für den Einsatz erfindungsgemäß solche Mikrowellen-Absorptionseigenschaften auf, daß es sich bei Strahlung mit Mikrowellen zerstörungsfrei erwärmt.

FIG. 1

EP 0 427 113 A1

## MIKROWELLENOFEN MIT EINSATZ

Die Erfindung betrifft einen Mikrowellenofen nach dem Oberbegriff des Patentanspruchs 1.

Die Funktionsweise der aus dem Stand der Technik bekannten Mikrowellenöfen beruht auf dem Prinzip, daß eine Vielzahl von Stoffen, wie beispielsweise Nahrungsmittel, in der Lage sind, Mikrowellen zu absorbieren und deren Energie dabei in Wärme umzuwandeln, um dadurch erhitzt zu werden. Zur Gewährleistung einer allseitigen Bestrahlung der Stoffe mit Mikrowellen zum Zweck einer möglichst gleichmäßigen Erhitzung bestehen Einsätze, wie z.B. Behälter, falls sie zur Aufnahme der Stoffe verwendet werden, aus Materialien, wie z.B. Glas, Papier oder Kunststoff, die keine Mikrowellen absorbieren, sondern von diesen durchdrungen werden. Daraus folgt, daß diese Materialien ebenso wie zu erwärmende Stoffe, die keine oder nur sehr geringe Mikrowellen-Absorptionseigenschaften aufweisen, in den bekannten Mikrowellenöfen nicht erwärmt werden können. Aus diesem Grunde ist der Einsatz der herkömmlichen Mikrowellenöfen in der Hauptsache auf das Erwärmen von Nahrungsmitteln beschränkt.

Die Erfindung unterscheidet sich vom Stand der Technik dadurch, daß das Material für den Einsatz solche Mikrowellen-Absorptionseigenschaften aufweist, daß es sich bei Bestrahlung mit Mikrowellen zerstörungsfrei erwärmt. Die erzeugte Wärme wird auf die vom Einsatz aufgenommenen Stoffe übertragen und erhitzt diese. Somit können sämtliche Stoffe einschließlich derjenigen, die Mikrowellen reflektieren oder durchlassen, in einfacher und bequemer Weise in herkömmlichen Mikrowellenöfen erwärmt werden. Statt herkömmlicher Mikrowellenöfen können auch für die jeweiligen Einsatzbereiche speziell konstruierte Mikrowellenöfen verwendet werden. Beispielsweise kann der den Einsatz aufnehmende Raum eines solchen Mikrowellenofens als Autoklav ausgebildet sein.

Der Mikrowellenofen und der Einsatz gemäß der Erfindung eignen sich vorzüglich zur Verwendung in Laboratorien zwecks Wärmezufuhr zur sämtlichen chemischen und physikalischen Reaktionen. Durch entsprechende Wahl des Materials bezüglich seiner Mikrowellen-Absorptionseigenschaften und der Materialdicke, die die zu erwärmenden Stoffe gegenüber der Mikrowellenbestrahlung abschirmt, kann der absorbierte Anteil der auf den Einsatz auftreffenden Mikrowellenstrahlung und damit die im Einsatz erzeugte Wärmemenge sowie die Temperatur, auf die der Einsatz erhitzt wird, und damit die Stärke des Wärmestroms vom Einsatz zu den erwärmenden Stoffen in weiten Grenzen variiert werden. Auf die gleiche Weise ist es möglich, veränderliche Anteile der Mikrowellenstrahlung durch das Material hindurch bis zu den zu erwärmenden Stoffen durchtreten zu lassen; allerdings ist eine effektive Erwärmung von Stoffen ohne oder nur mit sehr geringem Mikrowellen-Absorptionsvermögen nur bei möglichst hoher Mikrowellen-Absorption durch das Material zu erzielen.

Zwecks kontrollierter Wärmezufuhr zu den zu erwärmenden Stoffen ist es vorteilhaft, einen mit dem Einsatz verbundenen oder verbindbaren Thermosensor zu verwenden, der zwecks Steuerung oder Regelung der Mikrowellenenergie an eine Steuer- oder Regelungseinrichtung des Mikrowellengenerators des Mikrowellenofens anschließbar ist. Auf diese Weise kann die Temperatur des Einsatzes konstant auf dem Wert gehalten werden, der zur Durchführung der jeweiligen chemischen oder physikalischen Reaktion erforderlich ist.

Der Thermosensor umfaßt bevorzugt einen mit dem Einsatz verbundenen oder verbindbaren optischen Leiter zur Aufnahme und Übertragung der Wärmestrahlung des Einsatzes und einen an den optischen Leiter angeschlossenen oder anschließbaren Detektor, vorzugsweise einen Gallium-Arseniddetektor, zur Erzeugung eines der Wärmestrahlung entsprechenden elektrischen Signals.

Gemäß einer Weiterbildung der Erfindung besteht das Material für den Einsatz aus einer Materialmischung aus zumindest einem elektrisch und/oder magnetisch leitfähigem Material und wenigstens einem nichtleitenden Material, wobei das leitfähige Material im nichtleitenden Material fein verteilt ist. Das nichtleitende Material, vorzugsweise ein keramisches oder ein Kunststoffmaterial, ermöglicht eine vergleichsweise große Eindringtiefe und verhindert auf diese Weise den sogenannten Skin-Effekt mit übermäßiger Temperaturentwicklung innerhalb der äußeren Materialschicht des Einsatzes. Die zur Wärmeentwicklung erforderliche Absorption der Mikrowellen erfolgt durch das feinverteilte leitfähige Material, für das vorzugsweise Kohlenstoff und/oder wenigstens ein Metall verwendet wird.

Das nichtleitende Material kann ein Kunststoffmaterial oder ein keramisches Material sein. Ersteres ist bis zu einer Temperatur von etwa 350°C zerstörungsfrei erwärmbar, während letzteres bei höheren Temperaturen eingesetzt wird.

Vorteilhafterweise beträgt der Anteil des leitfähigen Materials an der Materialmischung im wesentlichen 1 bis 40 %, vorzugsweise 5 bis 15 %.

Gemäß einer Weiterbildung der Erfindung ist die Materialmischung chemisch inert. Zu diesem Zweck kann das Kunstoffmaterial Fluor-Kunststoff sein.

Der Einsatz ist bevorzugt in Form eines Behälters oder eines mehrere Behälter umfassenden Blocks ausgebildet. Dabei kann der Behälter mit einem Verschlußdeckel verschließbar sein, um eine Absorption von Mikrowellen durch zu erwärmende Stoffe mit entsprechendem Absorptionsvermögen zu verhindern, falls dies erforderlich ist. Ferner kann der Behälter gasdicht und in Weiterbildung der Erfindung druckdicht verschließbar sein, um nicht nur die Erwärmung von Feststoffen und Lösungen, sondern auch von Gasen bei atmosphärischem bzw. erhöhtem Druck zu ermöglichen.

Alternativ kann der Einsatz auch in Form einer Heizplatte zur Aufnahme der zu erwärmenden Stoffe bzw. von Gefäßen, die mit den zu erwärmenden Stoffen gefüllt sind, ausgebildet sein.

Gemäß einer Weiterbildung der Erfindung ist die Materialmischung als Beschichtung des Behälters bzw. der Heizplatte ausgebildet. Auf diese Weise können herkömmliche Behälter oder Heizplatten durch einfache Beschichtung mit der Materialmischung für den erfindungsgemäßen Zweck verwendet werden.

Nachstehend ist die Erfindung anhand eines bevorzugten Ausführungsbeispiels unter Bezugnahme auf die Zeichnung näher beschrieben. Es zeigen

Fig. 1 eine Schnittdarstellung eines erfindungsgemäßen Mikrowellenofens mit einem Einsatz gemäß einem ersten Ausführungsbeispiel, bei Betrachtung von vorn,

Fig. 2 eine Schnittdarstellung des Mikrowellenofens nach Fig. 1 mit einem Einsatz gemäß einem zweiten Ausführungsbeispiel, bei Betrachtung von vorn,

Fig. 3 eine Schnittdarstellung des Mikrowellenofens nach Fig. 1 mit einem Einsatz gemäß einem dritten Ausführungsbeispiel, bei Betrachtung von vorn.

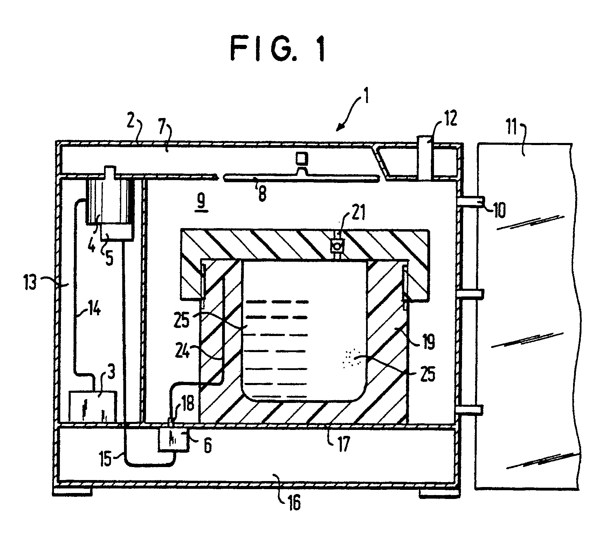

Der erfindungsgemäße Mikrowellenofen 1 nach den Fig. 1 bis 3 umfaßt ein Gehäuse 2, in dem ein Hochspannungstransformator 3, eine Magnetronröhre 4 mit einer Regelungseinrichtung 5, ein Gallium-Arseniddetektor 6, eine Wellenführung 7, ein Mikrowellen-Verteiler 8 und eine Ofenröhre 9 angeordnet sind. Das an seiner Vorderseite offene Gehäuse 2 ist durch eine an ihm mittels einer Scharnieranordnung 10 schwenkbar befestigte Tür 11 verschließbar. Die Ofenröhre 9 ist über einen Abzug 12 mit der Umgebung des Mikrowellenofens 1 verbunden. In einem von der Ofenröhre 9 getrennten seitlichen Raum 13 sind der Hochspannungstransformator 3 und die Magnetronröhre 4 mit der Regelungseinrichtung 5 angeordnet. Der Hochspannungstransformator 3 ist an eine nicht gezeigte Stromquelle anschließbar und über eine Stromleitung 14 mit der Magnetronröhre 4 verbunden. Die Regeleinrichtung 5 ist über eine Signalleitung 15 an den Detektor 6 angeschlossen. Letzterer befindet sich in einem Raum 16 unterhalb der Ofenröhre 9 und des Raumes 13, ist am Bodenblech 17 der Ofenröhre 9 befestigt und weist einen Steckanschluß 18 auf, der durch das Bodenblech 17 in die Ofenröhre 9 hineinragt. Die Magnetronröhre 4 ist zur Ausstrahlung ungepulster Mikrowellen und zur Regelung ihrer Dauerleistung mittels der Regelungseinrichtung 5 ausgebildet. Die Wellenführung 7 ist oberhalb der Ofenröhre 9 als separater Raum ausgebildet und dient zur Übertragung der von der Magnetronröhre 4, abgestrahlten Mikrowellen über den drehbaren Mikrowellen-Verteiler 8 in die Ofenröhre 9, deren Wandungen aus einem die Mikrowellen reflektierenden Material bestehen.

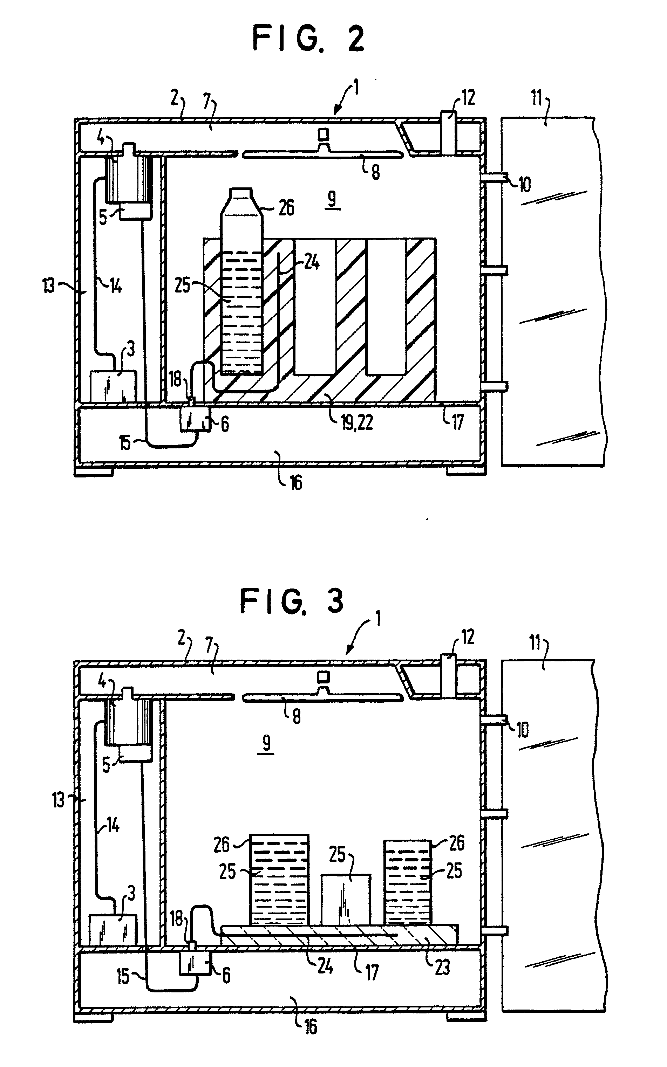

Die Ofenröhre 9 ist zur Aufnahme von Einsätzen ausgebildet. Der in Fig. 1 gezeigte Einsatz weist die Form eines Behälters 19 auf, der durch einen Schraubdeckel 20 druckdicht verschließbar ist. In einer Durchgangsöffnung des Schraubdeckels 20 ist ein Überdruckventil 21 angeordnet. Der Einsatz nach Fig. 2 besteht aus mehreren Behältern 19, die zu einem Block 22 zusammengefaßt sind. Der in Fig. 3 dargestellte Einsatz weist die Form einer flachen Heizplatte 23 auf.

Ein optischer Leiter 24 ist in die Wandung des Behälters 19 bzw. eines der Behälter 19 des Blockes 22 sowie in die Heizplatte 23 eingeführt und dort im Materialschluß befestigt. Das freie Ende des optischen Leiters 24 ist in den Steckanschluß 18 des Detektors 6 einsteckbar.

Sämtliche Einsätze 19, 22, 23 bestehen aus einer Materialmischung aus einem elektrisch und/oder magnetisch leitfähigem Material in Pulverform, das in einem pulverförmigen nichtleitenden Material fein verteilt ist. Diese Materialmischung absorbiert Mikrowellen und wandelt deren Energie in Wärme um. Die Materialien und deren Mischungsverhältnis sowie die Wandstärken der Behälter 19 und der Heizplatte 23 sind so gewählt, daß bei der jeweils verfügbaren maximalen Leistung der Mikrowellen die bei den jeweils durchzuführenden Reaktionen auftretende Maximaltemperatur in der Behälterwandung bzw. der Heizplatte erreicht wird.

Der mittels des Schraubdeckels 20 verschließbare Behälter 19 nach Fig. 1 ist zur Durchführung endothermer Reaktionen vorgesehen, die unter Druckentwicklung und unter möglicher Freisetzung zu entfernender Gase ablaufen. Die Materialmischung umfaßt als nichtleitendes Material einen inerten Kunststoff, nämlich PTFE, und als leitfähiges Material Kohlenstoff. Beide Materialien sind bei 400 °C zur Behälterform verpreßt. Die Materialmischung ist bis zu einer Temperatur von etwa 350 °C beständig und erlaubt es aufgrund seines inerten Verhaltens auch Stoffe 25 zu erwärmen, die ansonsten mit der Materialmischung reagieren würden. Außerdem erlaubt der Behälter 19 bei aufgeschraubtem Schraubdeckel 20 aufgrund der allseitigen Abschirmung seines Behälterinneren die Erwärmung von Stoffen 25, die ein hohes Mikrowellen-Absorptionsvermögen aufweisen, jedoch keiner Mikrowellenbestrahlung ausgesetzt werden sollen.

Der Block 22 nach Fig. 2 ist zur Aufnahme von Gefäßen 26 vorgesehen, die mit den zu erwärmenden Stoffen 25 gefüllt sind. Aus diesem Grunde umfaßt die ansonsten gleiche Materialmischung wie die für den Behälter 19 nach Fig. 1 verwendete statt eines inerten Kunststoffes einen nicht-inerten Kunststoff.

Wie in Fig. 3 dargestellt, ist die Heizplatte 23 sowohl zur Aufnahme von Gefäßen 26, die mit den zu erwärmenden Stoffen 25 gefüllt sind, als auch zur direkten Aufnahme von zu erwärmenden Stoffen 25 im festen Aggregatzustand, beispielsweise in Blockform, geeignet. Die Materialmischung der Heizplatte 23 ist bis zu Temperaturen oberhalb 350° C beständig und besteht deshalb aus Keramik als nichtleitendem Material und einem Metall als leitfähigem Material.

Die Funktion des erfindungsgemäßen Mikrowellenofens nach Fig. 1 ist wie folgt:
Der Behälter 19 wird nach dem Einfüllen der zu erwärmenden Stoffe 25 und nach Verschließen mittels des Schraubdeckels 20 in die Ofenröhre 9 des offenen Mikrowellenofens 1 eingesetzt. Das freie Ende des optischen Leiters 24 wird sodann in den Steckanschluß 18 des Detektors 6 eingesteckt, woraufhin doe Tür 11 des Mikrowellenofens 1 geschlossen wird. Nun kann der Mikrowellenofen 1 an die nicht gezeigte Stromquelle angeschlossen und daraufhin eingeschaltet werden.

Die nun von der Magnetronröhre 7 mit voller Leistung emitierten Mikrowellen gelangen durch die Wellenführung 7 zu dem sich drehenden Mikrowellen-Verteiler 8, der sie gleichmäßig in die Ofenröhre 9 abstrahlt. Diese abgestrahlten Mikrowellen treffen direkt oder nach Reflektion an den Wänden sowie am Bodenblech 17 der Ofenröhre 9 auf den Behälter 19 und dessen Schraubdeckel 20 auf, dringen nahezu vollständig in beide ein und werden ebenso nahezu vollständig von dem leitfähigen Material innerhalb der Materialmischung absorbiert. Die Energie der absorbierten Mikrowellen wird in Wärme umgesetzt , welche den Behälter 19 und den Schraubdeckel 20 erwärmt.

Die innerhalb der Materialmischung auftretende Wärmestrahlung wird vom optischen Leiter 24 aufgenommen, zum Detektor 6 geleitet und dort in ein entsprechendes elektrisches Signal umgewandelt, das seinerseits über die Signalleitung 15 zur Regelungseinrichtung 5 weitergeleitet wird. Hier erfolgt nun in bekannter Weise der Vergleich der gemessenen Temperatur bzw. des entsprechenden elektrischen Signals mit der an der Regelungseinrichtung 5 eingestellten Sollwerttemperatur und die Regelung der Leistung der Magnetronröhre 4, bis die Sollwerttemperatur im Behälter 19 und im Schraubdeckel 20 erreicht ist. Die zu erwärmenden Stoffe 25 werden durch die vom Behälter 19 und vom Schraubdeckel 20 abgegebene Wärme bis zur Sollwerttemperatur erhitzt, woraufhin die erwünschte Reaktion eintritt. Die dabei frei werdenden und unter Druck stehenden Gase entweichen durch das Überdruckventil 21 und den Abzug 12, um in eine nicht gezeigte Abzugseinrichtung zu gelangen.

Das Funktionsprinzip der in den Fig. 2 und 3 gezeigten Mikrowellenöfen 1 mit den Einsätzen 22, 23 ist das gleiche wie das des vorbeschriebenen Mikrowellenofens 1.

## Ansprüche

1. Mikrowellenofen mit wenigstens einem Einsatz zur Aufnahme von zu erwärmenden Stoffen, wobei der Einsatz aus einem Material mit bestimmten Mikrowellen-Absorptionseigenschaften besteht, dadurch **gekennzeichnet,** daß das Material für den Einsatz (19, 22, 23) solche Mikrowellen-Absorptionseigenschaften aufweist, daß es sich bei Bestrahlung mit Mikrowellen zerstörungsfrei erwärmt.

2. Mikrowellenofen nach Anspruch 1, **gekennzeichnet** durch einen mit dem Einsatz (19, 22, 23) verbundenen oder verbindbaren Thermosensor (6, 24), der zwecks Steuerung oder Regelung der Mikrowellenenergie an eine Steuer- oder Regelungseinrichtung (5) des Mikrowellengenerators (4) des Mikrowellenofens (1) anschließbar ist.

3. Mikrowellenofen nach Anspruch 2, dadurch **gekennzeichnet,** daß der Thermosensor (6, 24) einen mit dem Einsatz (19, 22, 23) verbundenen oder verbindbaren optischen Leiter (24) zur Aufnahme und Übertragung der Wärmestrahlung des Einsatzes (19, 22, 23) und einen an den optischen Leiter (24) angeschlossenen oder anschließbaren Detektor (6) zur Erzeugung eines der Wärmestrahlung entsprechenden elektrischen Signals umfaßt.

4. Mikrowellenofen nach Anspruch 3, dadurch **gekennzeichnet,** daß der Detektor (6) ein Gallium-Arseniddetektor ist.

5. Mikrowellenofen nach wenigstens einem der vorhergehenden Ansprüche, dadurch **gekennzeichnet,** daß der Mikrowellengenerator (4) zur Erzeugung ungepulster Mikrowellen und zur Steuerung oder Regelung seiner Dauerleistung ausgebildet ist.

6. Mikrowellenofen nach wenigstens einem der Ansprüche 1 bis 4,
dadurch **gekennzeichnet,**
daß der Mikrowellengenerator (4) zur Erzeugung gepulster Mikrowellen und zur Steuerung oder Regelung des Pulsverhältnisses derselben ausgebildet ist.

7. Einsatz für einen Mikrowellenofen nach wenigstens einem der vorhergehenden Ansprüche,
dadurch **gekennzeichnet,**
daß das Material für den Einsatz (19, 22, 23) aus einer Materialmischung aus zumindest einem elektrisch und/oder magnetisch leitfähigem Material und wenigstens einem nichtleitendem Material besteht, wobei das leitfähige Material im nichtleitenden Material fein verteilt ist.

8. Einsatz nach Anspruch 7,
dadurch **gekennzeichnet,**
daß das leitfähige Material Kohlenstoff und/oder wenigstens ein Metall ist.

9. Einsatz nach Anspruch 7 oder 8,
dadurch **gekennzeichnet,**
daß das nicht leitende Material ein keramisches oder ein Kunststoffmaterial ist.

10. Einsatz nach wenigstens einem der Ansprüche 7 bis 9,
dadurch **gekennzeichnet,**
daß die Materialmischung chemisch inert ist.

11. Einsatz nach wenigstens einem der Ansprüche 7 bis 10,
dadurch **gekennzeichnet,**
daß das Kunststoffmaterial ein Fluor-Kunststoff ist.

12. Einsatz nach wenigstens einem der Ansprüche 7 bis 11,
dadurch **gekennzeichnet,**
daß der Anteil des leitfähigen Material an der Materialmischung im wesentlichen 1 bis 40 %, vorzugsweise 5 bis 15 %, beträgt.

13. Einsatz nach wenigstens einem der vorhergehenden Ansprüche,
dadurch **gekennzeichnet,**
daß er in Form eines Behälters (19) oder eines mehrere Behälter (19) umfassenden Blockes (22) ausgebildet ist.

14. Einsatz nach Anspruch 13,
dadurch **gekennzeichnet,**
daß der Behälter (19) mit einem Verschlußdeckel (20) verschließbar ist.

15. Einsatz nach Anspruch 14,
dadurch **gekennzeichnet,**
daß der Behälter (19) gasdicht verschließbar ist.

16. Einsatz nach Anspruch 14 oder 15,
dadurch **gekennzeichnet,**
daß der Behälter (19) druckdicht verschließbar ist.

17. Einsatz nach Anspruch 14,
dadurch **gekennzeichnet,**
daß der Verschlußdeckel (20) eine Durchgangsöffnung aufweist.

18. Einsatz nach wenigstens einem der Ansprüche 14 bis 17,
dadurch **gekennzeichnet,**
daß der Verschlußdeckel (20) eine Durchgangsöffnung mit einem Überdruckventil (21) aufweist.

19. Einsatz nach wenigstens einem der Ansprüche 1 bis 12,
dadurch **gekennzeichnet,**
daß er in Form einer Heizplatte (23) zur Aufnahme der zu erwärmenden Stoffe (25) bzw. von Gefäßen (26), die mit den zu erwärmenden Stoffen (25) gefüllt sind, ausgebildet ist.

20. Einsatz nach wenigstens einem der Ansprüche 13 bis 19,
dadurch **gekennzeichnet,**
daß die Materialmischung als Beschichtung eines Behälters oder einer Heizplatte ausgebildet ist.

# FIG. 1

# FIG. 2

# FIG. 3

Europäisches
Patentamt

**EUROPÄISCHER
RECHERCHENBERICHT**

Nummer der Anmeldung

**EP 90 12 0947**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 215 708 (ESSWEIN)<br>* Spalte 1, Zeilen 4-7; Spalte 2, Zeilen 4-10; Spalte 2, Zeile 48 - Spalte 3, Zeile 56; Spalte 5, Zeilen 27-45; Spalte 5, Zeile 62 - Spalte 6, Zeile 19; Spalte 6, Zeilen 26-31; Figuren 1,2; Patentansprüche 1,2,7-9,14,15,17 *<br>- - - | 1,7-10, 12-14,17, 20 | B 01<br>J 19/12<br>H 05 B 6/64<br>H 05 B 6/80 |
| Y | | 2,5 | |
| Y | FR-A-2 362 340 (GENERAL ELECTRIC)<br>* Seite 1, Zeilen 1-5; Seite 4, Zeilen 1-37; Seite 5, Zeile 16 - Seite 6, Zeile 3; Seite 6, Zeilen 25-31; Seite 7, Zeilen 27-42; Figuren 1,2; Patentansprüche 1,3,4 *<br>- - - | 2,5 | |
| A | | 1,9,13,14 | |
| X | US-A-4 622 446 (SUGISAWA et al.)<br>* Spalte 1, Zeilen 7-10,57-60; Spalte 2, Zeilen 16-37; Spalte 3, Zeilen 4-41; Figur 1; Patentansprüche 1,3,4,6,7,34,38,42,46,50,62 *<br>- - - | 1,7-9,11, 13,19 | |
| A | US-A-4 835 354 (COLLINS et al.)<br>* Zusammenfassung; Spalte 1, Zeilen 9-16; Spalte 3, Zeilen 45-57; Spalte 4, Zeilen 4-19; Spalte 5, Zeilen 37-47; Patentansprüche 1,7 *<br>- - - | 5 | |
| A | US-A-4 517 430 (SLOTTAG)<br>* Zusammenfassung; Spalte 1, Zeile 60 - Spalte 2, Zeile 2; Spalte 3, Zeilen 21-36; Spalte 5, Zeilen 32-65; Figuren 2A,2B; Patentanspruch 12 *<br>- - - | 6 | RECHERCHIERTE SACHGEBIETE (Int. Cl.5)<br><br>H 05 B<br>B 01<br>J |
| P,A | US-A-4 882 128 (HUKVARI et al.)(21-11-1989)<br>* Zusammenfassung; Spalte 1, Zeile 56 - Spalte 2, Zeile 11; Spalte 2, Zeile 65 - Spalte 3, Zeile 10; Spalte 3, Zeile 29 -Spalte 4, Zeile 48; Spalte 6, Zeilen 47-50; Figur 1 *<br>- - -<br><div align="right">-/-</div> | 1,9-11, 13-18 | |

Der vorliegende Recherchenbericht wurde für alle Patentansprüche erstellt

| Recherchenort | Abschlußdatum der Recherche | Prüfer |
|---|---|---|
| Den Haag | 18 Februar 91 | STEVNSBORG N. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

Europäisches
Patentamt

**EUROPÄISCHER
RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 335 020 (SAVILLEX CORP.) <br> * Zusammenfassung; Spalte 1, Zeilen 17-23; Spalte 2, Zeile 44 - Spalte 3, Zeile 27; Spalte 4, Zeile 55 - Spalte 5, Zeile 14; Figur 1; Patentanspruch 1 * <br> – – – – – | 9-11, 13-18 | |

**RECHERCHIERTE
SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| Den Haag | 18 Februar 91 | STEVNSBORG N. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument

                    

& : Mitglied der gleichen Patentfamilie,
    übereinstimmendes Dokument